# FASCICULE DE BREVET EUROPEEN

(11) **EP 1 794 412 B1**
(45) Date de publication et mention de la délivrance du brevet: **30.11.2011**
(21) Numéro de dépôt: 05805804.1
(22) Date de dépôt: 20.09.2005
(51) Int. Cl.: C09K 8/54, C23F 11/14

(54) **PROCEDE DE TRAITEMENT POUR INHIBER LA CORROSION DE VOUTE DE PIPES UTILISES DANS L'INDUSTRIE PETROLIERE**
BEHANDLUNGSVERFAHREN ZUR VERHINDERUNG VON KORROSION AN DER SPITZE VON IN DER ÖLINDUSTRIE VERWENDETEN LEITUNGEN
TREATMENT METHOD FOR INHIBITING CORROSION OF TOP OF LINES USED IN THE OIL INDUSTRY

(30) Priorité: 22.09.2004 FR 0410003; 27.05.2005 FR 0505366
(43) Date de publication de la demande: 13.06.2007
(73) Titulaire: CECA S.A., 92250 La Garenne Colombes (FR)
(72) Inventeur: GILLET, Jean-Philippe, F-69530 Brignais (FR); MOSER, Frédéric, F-69310 Pierre-Bénite (FR); POU, Tong Eak, F-69540 Irigny (FR)
(74) Mandataire: Lhoste, Catherine
(86) Numéro de dépôt international: PCT/FR2005/002323
(87) Numéro de publication internationale: WO 2006/032774

(56) Documents cités:
- US-A- 4 676 834
- US-A- 5 902 515
- US-A- 5 961 885
- US-A1- 2003 183 808

## Description

La présente invention concerne l'inhibition des pipes en acier contre la corrosion de voûte (Top of Line corrosion) mis en oeuvre dans la production du pétrole et/ou du gaz.

La présente invention propose un procédé de traitement pour inhiber la corrosion due à la condensation d'eau sur la paroi supérieure à l'intérieur du pipe, ce type de corrosion est connu sous le nom de « Midi corrosion » ou corrosion de voûte (en anglais : Top of line corrosion).

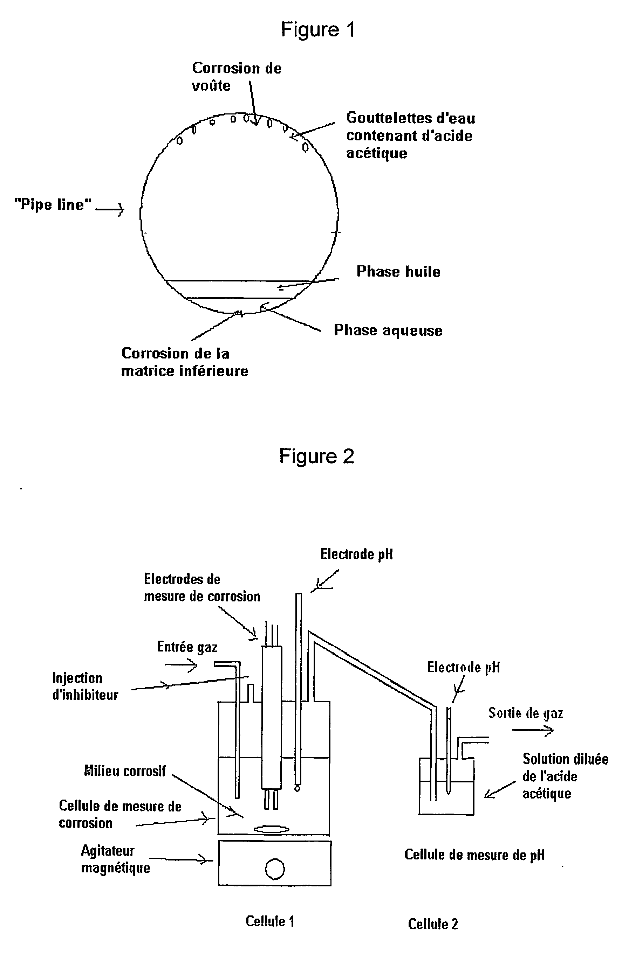

Dans un pipe afin de limiter la corrosion de type carbonique (due au CO₂) et/ou de type sulfhydrique (due à H₂S), on préconise l'emploi de nombreux inhibiteurs pour protéger efficacement le métal du pipe contre l'une et/ou l'autre de ces corrosions, par injection continue dans le fluide corrosif qui ainsi se distribue de manière homogène tout au long du « pipe ». Mais la situation s'avère plus difficile dans le cas où deux voire trois des paramètres suivants sont réunis : un écoulement laminaire du fluide corrosif, un refroidissement de la canalisation par défaut d'isolement et une présence d'acide organique (généralement acide acétique) dans la phase liquide. Ce phénomène de corrosion de voûte et l'explication qui en est donnée ci-dessus sont représentés à la Figure 1.

Pour lutter contre la corrosion de voûte, Y.M. Gunaltun and A. Belghazi, dans «Control of Top of line corrosion by chemical treatment », NACE Corrosion /2001 paper n° 01033 préconisent le traitement par batch avec un inhibiteur persistant ou par injection de méthyldiéthanolamine (MDEA) de façon à neutraliser l'acidité du milieu aqueux corrosif de la matrice de base, mais ils ont constaté que cette amine ne neutralise pas l'acidité du condensat (gouttelettes d'eau condensées) sur la voûte.

R.L. Martin, dans « Inhibition of Vapor Phase Corrosion in gas pipelines », NACE Corrosion/ 97, paper n°337 et N.N. Andreev and Yu. I. Kuznetsov, dans « Volatile Inhibitors for CO2 Corrosion », NACE Corrosion /98, paper n° 241*,* ont proposé des inhibiteurs de corrosion volatils (VCI : Volatile Corrosion Inhibitors) à très fort dosage (de l'ordre de quelques pourcents).

Guenter Schmitt, Marcel Sheepers and Gerit Siegmund, dans "Inhibition of the top of line corrosion under stratified flow", NACE Corrosion/2001, paper n° 01032 ont proposé d'utiliser un inhibiteur « grimpant » qui sera introduit dans le milieu corrosif comme un inhibiteur conventionnel. Par sa très faible tension superficielle, ce type d'inhibiteur grimperait tout au long de la paroi vers le sommet à l'intérieur du pipe (position midi) inhibant ainsi la corrosion de voûte.

Mais aucune de ces solutions connues n'apporte de solution convenable et réellement efficace au problème de corrosion de voûte des pipes dans la production du pétrole et du gaz.

La présente invention propose de résoudre le problème de la corrosion de voûte des pipes métalliques, notamment en acier, dans lesquels circulent et/ou sont présents des fluides corrosifs (i-e contenant de l'eau saturée en CO₂ ou en H₂S plus un acide organique, en général de l'acide acétique) par l'utilisation d'amines spécifiques et/ou leurs dérivés qui une fois introduits dans le milieu corrosif par injection, de préférence continue, d'une part neutralisent l'acidité du milieu corrosif dans la phase où il y a écoulement laminaire et d'autre part passent en phase vapeur pour neutraliser l'acidité les gouttelettes d'eau qui sont condensées (condensat) sur la voûte du pipe.

Ces amines spécifiques ont un point d'ébullition compris entre 105 et 130 °C et de préférence sont :
- la 3-méthoxypropylamine (MOPA) (point d'ébullition : 118 °C)
- l'éthyldiisopropylamine (EDIPA) (point d'ébullition : 127 °C) et/ou
- la pyridine (point d'ébullition : 114 °C) et ses dérivés (mono-, di- et trialkyl pyridines) . Par simplification, dans tout ce qui suit le terme amine recouvre à la fois les amines et les dérivés cités précédemment.

Ces amines peuvent être utilisées seules ou en mélange ou en formulation avec d'autres inhibiteurs, destinés à inhiber d'autres types de corrosion rencontrés, tels que corrosion carbonique, sulfhydrique). Les amines selon l'invention, leurs mélanges et leurs formulations sont de préférence totalement solubles dans l'eau de telle façon qu'après leur injection, en continu, ces produits se trouvent dans la phase aqueuse de bottom line et également dans la phase aqueuse condensée qui est la cause de corrosion de voûte. De manière avantageuse, ces produits ne doivent favoriser ni la formation d'émulsion Huile/Eau ni la formation de mousse.

A titre d'inhibiteurs de corrosion dits conventionnels, on peut par exemple citer les imidazolines et/ou leurs dérivés et/ou les esters phosphoriques et/ou les thioacides.

Parmi les imidazolines préférées, on peut citer celles qui proviennent de la réaction de condensation entre un acide gras (ou un mélange d'acides gras) de formule RCOOH où R est une chaîne alkyle linéaire ou ramifiée allant de C₁₂ à C₂₂ et de poly alkylène polyamine dont le nombre de carbone n peut varier de 1 à 10 du groupement alkylène peut varier entre 1 et 10, telles que par exemple la DETA (diéthylène triamine), la TETA (triéthylène trétramine), TEPA (tétraéthylène pentamine) ou PEHA (pentaéthylène hexamine), répondant à la formule :

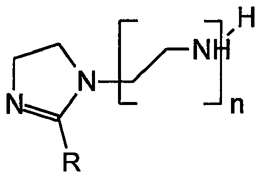

Les imidazolines préférées sont des imidazolines oxyéthylées ayant de 1 à 20 motifs oxyéthylène.

Parmi les thioacides, on peut par exemple citer l'acide thioglycolique ou l'acide mercaptopropionique.

Les compositions inhibitrices selon l'invention peuvent être utilisées pures ou diluées dans un solvant ou encore en émulsion ou suspension.

Les compositions inhibitrices sont utilisées de, préférence en traitement en continu à raison de 100 ppm à 10.000 ppm exprimés en poids des matières inhibitrices de corrosion pour une partie en volume de fluides corrosifs à traiter.

Les exemples suivants sont destinés à mieux comprendre l'invention.

### Exemple 1 évaluation du pouvoir neutralisant de différents inhibiteurs de corrosion

On teste le pouvoir neutralisant de l'amine selon l'invention (MOPA) et à titre comparatif les amines suivantes :
EDIPA (point d'ébullition : 103 °C)
Pyridine (point d'ébullition : 114 °C)
3-isopropylamine (IPOPA) (point d'ébullition : 103 °C)
3-diméthylaminopropylamine (DMAPA) (point d'ébullition : 133 °C)
méthyldiéthanolamine (MDEA) (point d'ébullition : 247 °C)
octylamine (OA) (point d'ébullition : 176 °C)
cyclohexylamine (CHA) (point d'ébullition : 134 °C)

Le dispositif expérimental simulant la condensation d'eau pour la corrosion de voûte est représenté à la figure 2. La cellule n°1 (réacteur) représente la matrice de base qui est un milieu aqueux corrosif où l'écoulement est laminaire. La cellule n°2 représente la phase aqueuse condensée (condensat) à la voûte. Les vitesses de corrosion de l'acier au carbone sont mesurées par la méthode LPR. La neutralisation est caractérisée par une mesure de pH.

Les deux cellules en verre contiennent une solution à 1 g/l de NaCl et 1.000 ppm d'acide acétique. Ces solutions sont désaérées par barbotage d'azote puis saturées en CO₂ La température de travail est de 85°C dans la cellule n°1, pour la cellule n°2, température ambiante (20-25 °C). On pratique des tests de « screening » où la vitesse de condensation est très faible mais non contrôlée. Pour ce dispositif expérimental on peut savoir si l'amine peut passer en phase vapeur et neutraliser l'acidité de l'eau condensée. On étudie ainsi le pouvoir neutralisant de l'amine. Le tableau 1 indique les pH de neutralisation de la cellule n°1 ou réacteur (phase aqueuse de la matrice de base) en fonction des doses d'amines ajoutées dans le réacteur.

**Tableau 1**

| Evolution du pH de l'eau dans le réacteur | | | | | | | | |
|---|---|---|---|---|---|---|---|---|
| Dose (ppm) | IPOPA | DMAPA | MDEA | OA | EDIPA | pyridine | MOPA | CHA |
| 0 | 3,26 | 3,24 | 3,44 | 3,38 | 3,31 | 3,43 | 3,45 | 3,40 |
| 50 | 3,40 | 3,56 | 3,62 | 3,49 | 3,42 | 3,64 | 3,64 | 3,60 |
| 200 | 3,54 | 3,72 | 3,76 | 3,61 | 3,53 | 3,82 | 3,80 | 3,76 |
| 500 | 4,23 | 4,60 | 4,58 | 4,17 | 3,98 | 4,34 | 4,48 | 4,38 |
| 1000 | 4,58 | 5,42 | 4,90 | 4,56 | 4,27 | 4,61 | 4,97 | 4,84 |
| 2000 | 5,29 | 6,40 | 5,83 | 5,14 | 4,70 | 4,87 | 6,1 | 5.79 |

On constate que toutes les amines testées neutralisent bien cette phase aqueuse malgré le barbotage en continu de CO₂. et qu'elles possèdent un effet tampon. Le tableau 2 donne la vitesse de corrosion de l'acier placé dans le réacteur (cellule n°1) en fonction des doses d'amines testées.

**Tableau 2**

| Pourcentage de protection de l'acier placé dans le fluide corrosif du réacteur | | | | | | | | |
|---|---|---|---|---|---|---|---|---|
| Dose | IPOPA | DMAPA | MDEA | OA | EDIPA | pyridine | MOPA | CHA |
| (ppm) | | | | | | | | |
| 50 | 0 | 4% | 54% | 16% | 0 | 0 | 0 | 0 |
| 200 | 0 | 6% | 59% | 22% | 5% | 0 | 3% | 0 |
| 500 | 4% | 36% | 74% | 42% | 9% | 3% | 9% | 2% |
| 1000 | 16% | 60% | 81% | 52% | 21% | 5% | 25% | 17% |
| 2000 | 45% | 81% | 92% | 74% | 35% | 12% | 60% | 51% |

Le MDEA protège bien l'acier dans le fluide corrosif du réacteur. Le tableau 3 indique les pouvoirs neutralisants des amines dans le condensat acide.

**Tableau 3**

| Evolution du pH de condensat | | | | | | | | |
|---|---|---|---|---|---|---|---|---|
| Dose (ppm) | IPOPA | DMAPA | MDEA | OA | EDIPA | pyridine | MOPA | CHA |
| 0 | 3,16 | 3,24 | 3,26 | 3,18 | 3,26 | 3,16 | 3,23 | 3,16 |
| 50 | 3,16 | 3,24 | 3,26 | 3,24 | 3,27 | 3,19 | 3,24 | 3,17 |
| 200 | 3,16 | 3,24 | 3,26 | 3,18 | 3,30 | 3,29 | 3,37 | 3,17 |
| 500 | 3,16 | 3,24 | 3,28 | 3,20 | 3,95 | 3,89 | 3,40 | 3,18 |
| 1000 | 3,16 | 3,24 | 3,28 | 3,22 | 4,40 | 4,29 | 3,42 | 3,18 |
| 2000 | 3,16 | 3,26 | 3,27 | 3,20 | 5,02 | 4,85 | 3,48 | 3,18 |

### Exemple 2 évaluation du pouvoir neutralisant

On teste le pouvoir neutralisant de la MDEA de l'EDIPA, de la pyridine et de l'amine (MOPA) selon l'invention dans un dispositif expérimental similaire à celui de l'exemple 1. Dans la cellule n°1 (réacteur) se trouve l'eau distillée dans laquelle on ajoute de l'acide acétique avec ou sans amines neutralisantes. La température de ce réacteur est de 95°C. La cellule n°2 est destinée à récupérer la phase condensée (condensat) provenant de la cellule n°1. On peut ainsi mesurer directement le pH de l'eau condensée en fonction de la teneur en amine ajoutée dans le réacteur. Cette cellule est également munie d'un système permettant de mesurer la vitesse de corrosion, par mesure d'impédance, de l'acier en contact avec le condensat. La température dans la cellule n°2 est de 60°C. La vitesse de condensation est contrôlée par la vitesse de barbotage de CO₂. Le détail de ce dispositif est décrit dans «Control of Top of line corrosion by chemical treatment», NACE Corrosion /2001 paper n° 01033 précédemment cité. Elle est fixée à 0,7 ml / s.m², assez importante pour maintenir le pH de l'eau condensée à une valeur faible.

Le tableau 4 donne le pH de neutralisation du réacteur, contenant 1.043 ppm d'acide acétique, et du condensat en fonction de la teneur en MDEA .

**Tableau 4**

| Teneur en MDEA | 0 ppm | 856 ppm | 1843 ppm |
|---|---|---|---|
| pH du réacteur contenant 1043 ppm d'acide acétique | 4,10 | 5,00 | 7,00 |
| pH du condensat | 4,10 | 3,90 | 4,10 |

La MDEA neutralise bien la phase aqueuse contenue dans le réacteur. Cependant cette amine n'a pas d'influence sur le pH du condensat. Ces résultats confirment ceux du tableau 1 où les expériences ont été realisées à faible vitesse de condensation.

Le tableau 5 indique les pH de neutralisation du réacteur et du condensat pour la pyridine.

**Tableau 5**

| Dose de neutralisant | pH de l'eau du réacteur | pH du condensat |
|---|---|---|
| 0 (sans acide acétique) | 4,35 | 4,55 |
| 0 (avec 500 ppm d'acide acétique ajouté dans le réacteur) | 3,70 | 3,60 |
| 100 | 4,10 | 3,80 |
| 200 | 4,12 | 3,70 |
| 400 | 4,30 | 3,95 |
| 600 | 4,45 | 4,30 |
| 800 | 4,6 | 4,60 |
| 1.000 | 4,8 | 4,80 |

Après la saturation en CO₂, le pH du réacteur est de 4,35 et celui de condensat, est de 4,55. L'ajout de 500 ppm d'acide acétique dans le réacteur, fait chuter le pH du réacteur à 3,7 et celui du condensat à 3,6. Le pH de l'eau du réacteur et de celui du condensat augmentent avec la concentration de la pyridine jusqu'à 1.000 ppm.

Le tableau 6 indique les pH de neutralisation du réacteur et du condensat pour la MOPA.

**Tableau 6**

| Dose de neutralisant | pH de l'eau du réacteur | pH du condensat |
|---|---|---|
| 0 (sans acide acétique) | 4,30 | 4,10 |
| 0 (avec 500 ppm d'acide acétique ajouté dans le réacteur) | 3,60 | 3,60 |
| 100 | 4,00 | 4,00 |
| 200 | 4,30 | 4,30 |
| 400 | 4,60 | 4,60 |
| 600 | 5 | 4,80 |
| 800 | 5,50 | 4,80 |
| 1000 | 6,10 | 4,80 |

Après la saturation en CO₂, le pH de l'eau dans le réacteur est de 4,3 et celui de condensat est de 4,1. L'ajout de 500 ppm d'acide acétique dans le réacteur, fait chuter le pH du réacteur à 3,6 et celui du condensat à 3,6 également.

Le pH du condensat atteint une saturation à partir de 800 à 1.000 ppm de MOPA. En revanche celui du réacteur continue à augmenter.

Le tableau 7 indique les pH de neutralisation du réacteur et du condensat pour l'EDIPA.

**Tableau 7**

| Dose de neutralisant | pH de l'eau du réacteur | pH du condensat |
|---|---|---|
| 0 (sans acide acétique) | 4,35 | 4,55 |
| 0 (avec 500 ppm d'acide acétique ajouté dans le réacteur) | 3,55 | 3,60 |
| 100 | 3,80 | 3,70 |
| 200 | 3,90 | 3,90 |
| 400 | 4,20 | 4,30 |
| 600 | 4,30 | 4,45 |
| 800 | 4,60 | 4,80 |
| 1000 | 4,80 | 4.45 |

Après la saturation en CO₂, le pH du réacteur est de 4,35 et celui de condensat est de 4,55. L'ajout de 500 ppm d'acide acétique dans le réacteur fait chuter le pH du réacteur à 3,55 et celui du condensat à 3,6.

L'EDIPA a le même comportement que la pyridine : les deux pH n'augmentent plus à partir de 800 ppm à 1.000 ppm.

Contrairement à l'exemple 1 où la vitesse de condensation est très faible, dans l'exemple 2 avec une vitesse de condensation d'eau de 0,7 ml / s.m², on constate que la MOPA a un pouvoir neutralisant plus important que la pyridine et que l'EDIPA.

### Exemple 3 : A- Mesure de pH du réacteur et du condensat en fonction de la concentration en MOPA

Le dispositif expérimental utilisé est décrit dans l'exemple 2.

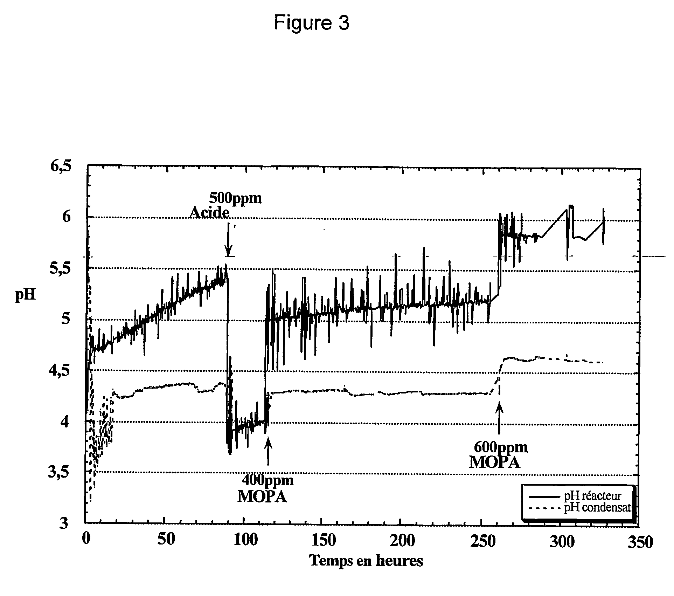

La Figure 3 donne les courbes d'évolution de pH du réacteur (courbe supérieure) et celui du condensat (courbe inférieure). Le débit du condensat est 0,7 ml/s.m.

En milieu saturé en CO₂, le pH de l'eau du réacteur se stabilise autour de 5,4 et celui du condensat se stabilise autour de 4,3. L'ajout de 500 ppm d'acide acétique fait descendre ces deux pH à 4.

A 400 ppm de MOPA ajoutée, le pH du condensat se stabilise autour de 4,3 et celui du réacteur se stabilise autour de 5,3.

A 600 ppm de MOPA ajoutée, le pH du condensat se stabilise à 4,7 et celui du réacteur se stabilise à 5,8.

La MOPA neutralise bien le pH de la phase aqueuse de la matrice de base (réacteur) et celui de la phase aqueuse condensée (condensat) de la voûte.

### Exemple 3-B Mesure de la vitesse de corrosion dans le condensat en fonction de la concentration en MOPA

Le tableau 8 donne les valeurs de vitesses de corrosion d'une éprouvette d'acier doux en contact avec le condensat pour différentes concentrations en acide acétique et en MOPA.

**Tableau 8**

| Eau de condensation | résistance de polarisation (Ω.cm²⁾ | Vcorrosion (mm/an) |
|---|---|---|
| I. = saturée en CO₂ | 1640 | 0,20 |
| II. = saturée en CO₂ + 500 ppm d'acide acétique | 600 | 0,53 |
| II + 400 ppm | 1080 | 0,29 |
| II + 600 ppm | 1400 | 0,22 |

Dans le condensat saturé en CO₂, la vitesse de corrosion de l'acier doux est de 0,20 mm/an. L'ajout de 500 ppm d'acide acétique fait augmenter cette vitesse à 0,53 mm /an.

En présence de 400 ppm de MOPA, on constate que la vitesse de corrosion est descendue à 0,29 mm/an. A 600 ppm de MOPA, la vitesse de corrosion de l'acier doux est de 0,22 mm/an, proche de 0,20 mm/an sans acide acétique.

La MOPA neutralise l'acidité de l'acide acétique dans le condensat et protège également de la corrosion dans ce milieu.

### Exemple : 3-C Influence de la quantité d'acide acétique ajoutée dans le réacteur

Le tableau 9 donne les valeurs de pH de l'eau de condensation en présence de 1000 ppm d'acide acétique ajouté dans le réacteur, en présence de MOPA ou de MDEA.

**Tableau 9.**

| | CO₂ | 1000 ppm d'acide acétique ajoutés | 400 ppm de neutralisant ajoutés | | 600 ppm de neutralisant ajoutés | | 800 ppm de neutralisant ajoutés | |
|---|---|---|---|---|---|---|---|---|
| | | | MOPA | MDEA | MOPA | MDEA | MOPA | MDEA |
| pH | 4,2 | 3,6 | 3,7 | 3,7 | 3,7 | ,7 | 3,7 | 3,7 |
| Rp Ω.cm² | 1640 | 600 - 400 | 900 | 400 | 1100 | 500 | 1300 | 500 |
| Vcorrosion (mm / an) | 0.2 | 0,53 - 0,82 | 0,36 | 0,82 | 0,29 | 0,65 | 0,25 | 0,65 |

On constate que pour ce qui concenre le pH, la MOPA se comporte comme la MDEA.

Quand on augmente la dose de MDEA, la valeur de Rp reste à peu près constante. D'une manière surprenante, on voit que quand la concentration en MOPA augmente, la valeur de Rp augmente également. La vitesse de corrosion diminue.

La MOPA peut donc passer en phase vapeur pour inhiber la corrosion dans l'eau de condensation.

### Exemple 4 : Formulation d'un inhibiteur de corrosion permettant de protéger la corrosion de voûte et aussi la corrosion dans la matrice de base (en anglais bottom line)

Une formulation inhibitrice de corrosion de composition suivante a été préparée, appelée dans ce qui suit Formule F :

| | |
|---|---|
| Amine selon l'invention | 96 % |
| Imidazoline | 1 % |
| Imidazoline éthoxylée | 2,5 % |
| Thioacide | 0,5% |

L'imidazoline est un produit de condensation entre un acide gras oléïque, et une polyalkylènepolyamine de type DETA (DiEthylèneTriAmine).

L'imidazoline éthoxylée est l'imidazoline citée au dessus et dont le nombre de motif oxyéthylène ou OE est de 12.

Le thioacide est l'acide thioglycolique.

On teste également la MOPA seule.

### Exemple 4-A : Mesure de pH de l'eau condensée et de la résistance de polarisation de l'acier au carbone placé dans cette eau en fonction de la concentration de la formule F

Le tableau 10 montre les valeurs de pH de l'eau condensée et de la résistance de polarisation en fonction de la concentration de MOPA et de la formule F. L'étude se fait en présence de 1.000 ppm d'acide acétique.

**Tableau 10**

| | CO₂ | 1000 ppm d'acide acétique ajoutés | 400 ppm de neutralisant | | 600 ppm de neutralisant ajoutés | | 800 ppm de neutralisant ajoutés | |
|---|---|---|---|---|---|---|---|---|
| | | | MOPA | Form F | MOPA | Form F | MOPA | Form F |
| pH | 4,2 | 3,6 | 3,7 | 3,7 | 3,7 | 3,7 | 3,7 | 3,7 |
| Rp Ω.cm² | 1640 | 600 | 900 | 1200 | 1100 | 1400 | 1300 | 1900 |
| Vcorrosion mm/an | 0,2 | 0,53 | 0,36 | 0,27 | 0,29 | 0,23 | 0,25 | 0,17 |

Jusqu'à 800 ppm, on constate que la formule F ne neutralise pas l'acidité de l'eau condensée. Son pH reste constant. En revanche, comme pour la MOPA la valeur de Rp augmente avec la concentration de F. La vitesse de corrosion diminue avec l'augmentation de la concentration en MOPA et en F. L'augmentation de Rp ou la diminution de la vitesse de corrosion est plus importante pour la formule F que pour la MOPA seule.

### Exemple 4-B: Efficacité anti-corrosion de la matrice de base (en anglais bottom line) de la formule F en milieu saturé en CO₂ contenant 1.000 ppm d'acide acétique en statique.

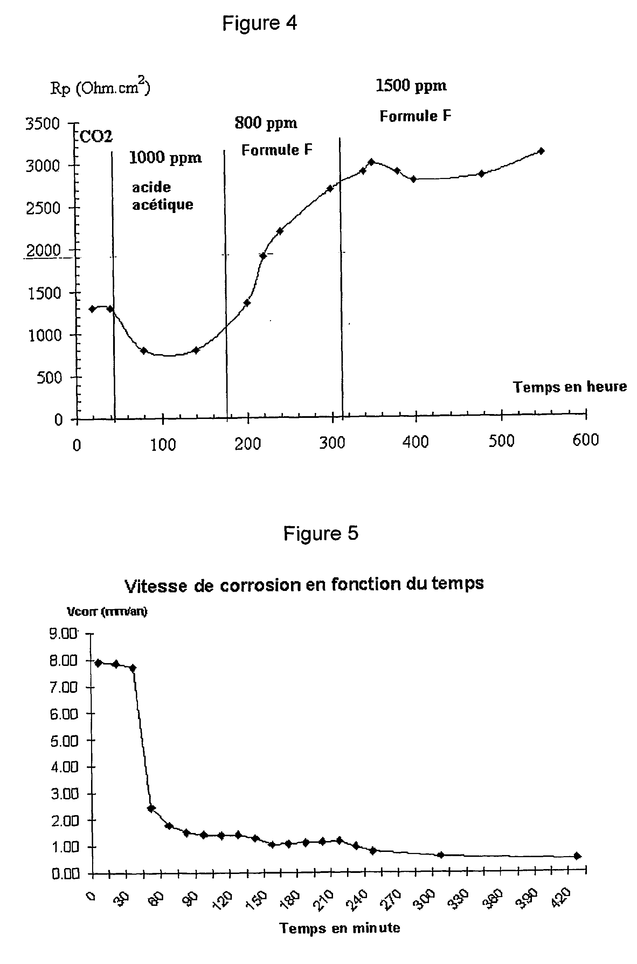

La figure 4 montre la variation de la résistance de polarisation d'un acier carbone dans l'eau déminéralisée saturée en CO₂ placé dans le réacteur à 60°C en fonction de la concentration de la formule F. Cette expérience représente l'étude d'inhibition de la matrice de base ( en anglais bottom line ). On peut constater que la valeur de Rp en présence de 1.000 ppm d'acide acétique est de 800 Ω.cm² (soit une vitesse de corrosion de 0,41 mm/an). A partir de 800 ppm de la formule F, la résistance de polarisation se stabilise autour de 3.000 Ω.cm² (soit une vitesse de corrosion de 0,10 mm/an). La formule F protège également le bottom line corrosion.

### Exemple 4-C : Efficacité anti-corrosion de la matrice de base (en anglais bottom line) de la formule F en milieu saturé en CO₂ contenant 1000 ppm d'acide acétique en dynamique

La figure 5 donne la variation de la vitesse de corrosion de l'électrode en acier carbone dans l'eau 1g/l de NaCl saturé en CO₂ avec 1.000 ppm d'acide acétique, à 60°C et sous la contrainte de cisaillement de 70 Pa en fonction du temps.

Le dosage de de la formule F est de 1000 ppm. On voit sur cette courbe que la vitesse de corrosion initiale est de 7,8 mm/an Après l'ajout de la formule F, cette vitesse chute et se stabilise à 0,7 mm/an, soit plus de 90% de protection.

## Revendications

1. Procédé pour limiter la corrosion de voûte de pipes pétroliers où circule un fluide pétrolier et qui sont mis en oeuvre dans la production du pétrole et/ou du gaz, **caractérisé en ce que** l'on injecte, dans ledit fluide pétrolier, de préférence en continu, une composition inhibitrice, sous forme pure ou diluée, ladite composition inhibitrice :
- étant soluble en toute proportion dans l'eau, et
- contenant, à titre d'inhibiteur de corrosion, au moins une amine qui est la 3-méthoxypropylamine (MOPA).

2. Procédé selon la revendication 1, dans lequel ladite composition inhibitrice comprend en outre au moins une molécule inhibitrice de corrosion choisie parmi les imidazolines et/ou leurs dérivés, les esters phosphoriques et les thioacides.

3. Procédé selon l'une quelconque des revendications 1 ou 2, dans lequel ladite composition inhibitrice comprend :
- au moins une amine telle que définie à la revendication 1,
- au moins une imidazoline,
- au moins une imidazoline éthoxylée, et
- au moins un thioacide.

4. Procédé selon l'une quelconque des revendications précédentes, dans lequel ladite composition inhibitrice est utilisée en traitement en continu à raison de 100 ppm à 10.000 ppm exprimés en poids des matières inhibitrices de corrosion pour une partie en volume de fluides corrosifs à traiter.

5. Utilisation d'une composition inhibitrice, sous forme pure ou diluée, soluble en toute proportion dans l'eau et contenant, à titre d'inhibiteur de corrosion, au moins une amine qui est la 3-méthoxypropylamine (MOPA), pour limiter la corrosion de voûte de pipes pétroliers ou circule un fluide pétrolier, et qui sont mis en oeuvre dans la production du pétrole et/ou du gaz.

6. Utilisation selon la revendication 5, dans laquelle ladite composition inhibitrice comprend en outre au moins une molécule inhibitrice de corrosion choisie.de préférence parmi les imidazolines et/ou leurs dérivés, et/ou les esters phosphoriques et/ou les thioacides.

7. Utilisation selon l'une quelconque des revendications 5 ou 6, dans laquelle ladite composition inhibitrice, utilisée pure ou diluée, comprend :
- au moins une amine telle que définie à la revendication 5,
- au moins une imidazoline,
- au moins une imidazoline éthoxylée, et
- au moins un thioacide.

8. Utilisation selon l'une quelconque des revendications 5 à 7, pour la protection à la fois de la corrosion de voûte (Top of line) et de la corrosion de la matrice de base (Bottom line).

9. Utilisation selon l'une quelconque des revendications 5 à 8, dans laquelle ladite composition inhibitrice est mise en oeuvre en traitement en continu à raison de 100 ppm à 10.000 ppm exprimés en poids des matières inhibitrices de corrosion pour une partie en volume de fluides corrosifs à traiter.

## Claims

1. Process for limiting top of line corrosion of oil pipes in which a petroleum fluid circulates and which are employed in the production of oil and/or gas, **characterized in that** an inhibitory composition, in the pure or diluted form, is injected into the said petroleum fluid, preferably continuously, the said inhibitory composition:
- being soluble in water in all proportions, and
- comprising, as corrosion inhibitor, at least one amine which is 3-methoxypropylamine (MOPA).

2. Process according to Claim 1, in which the said inhibitory composition additionally comprises at least one corrosion-inhibiting molecule chosen from imidazolines and/or their derivatives, phosphoric esters and thioacids.

3. Process according to either one of Claims 1 and 2, in which the said inhibitory composition comprises:
- at least one amine as defined in Claim 1,
- at least one imidazoline,
- at least one ethoxylated imidazoline, and
- at least one thioacid.

4. Process according to any one of the preceding claims, in which the said inhibitory composition is used in continuous treatment in a proportion of from 100 ppm to 10 000 ppm, expressed as weight of the corrosion-inhibiting materials per one part by volume of corrosive fluids to be treated.

5. Use of an inhibitory composition, in the pure or diluted form, which is soluble in water in all proportions and which comprises, as corrosion inhibitor, at least one amine which is 3-methoxypropylamine (MOPA),
to limit the top of line corrosion of oil pipes in which a petroleum fluid circulates and which are employed in the production of oil and/or gas.

6. Use according to Claim 5, in which the said inhibitory composition additionally comprises at least one corrosion-inhibiting molecule preferably chosen from imidazolines and/or their derivatives, and/or phosphoric esters and/or thioacids.

7. Use according to either one of Claims 5 and 6, in which the said inhibitory composition, used pure or diluted, comprises:
- at least one amine as defined in Claim 5,
- at least one imidazoline,
- at least one ethoxylated imidazoline, and
- at least one thioacid.

8. Use according to any one of Claims 5 to 7, for protection both from top of line corrosion and bottom of line corrosion.

9. Use according to any one of Claims 5 to 8, in which the said inhibitory composition is employed in continuous treatment in a proportion of from 100 ppm to 10 000 ppm, expressed as weight of the corrosion-inhibiting materials per one part by volume of corrosive fluids to be treated.

## Patentansprüche

1. Verfahren zur Begrenzung der Deckenkorrosion bei Rohrleitungen für Erdölprodukte, in denen ein erdölartiges Fluid strömt und die bei der Erzeugung von Erdöl und/oder Gas eingesetzt werden, **dadurch gekennzeichnet, dass** dem erdölartigen Fluid vorzugsweise kontinuierlich eine Hemmzusammensetzung in reiner oder verdünnter Form zugesetzt wird, wobei die Hemmzusammensetzung:
- in beliebigen Anteilen in Wasser löslich ist, und
- mindestens ein Amin, nämlich 3-Methoxypropylamin (MOPA), als Korrosionsinhibitor enthält.

2. Verfahren nach Anspruch 1, wobei die Hemmzusammensetzung darüber hinaus mindestens einen korrosionshemmenden Stoff umfasst, der aus den Imidazolinen und/oder deren Derivaten, den Phosphorsäureestern und den Thiosäuren ausgewählt ist.

3. Verfahren nach einem beliebigen der Ansprüche 1 oder 2, wobei die Hemmzusammensetzung Folgendes umfasst:
- mindestens ein Amin gemäß der Begriffsbestimmung in Anspruch 1,
- mindestens ein Imidazolin,
- mindestens ein ethoxyliertes Imidazolin, und
- mindestens eine Thiosäure.

4. Verfahren nach einem beliebigen der vorhergehenden Ansprüche, wobei die Hemmzusammensetzung derart zur kontinuierlichen Behandlung verwender wird, dass sie 100 ppm bis 10.000 ppm ausmacht, ausgedrückt nach Gewicht der korrosionshemmenden Stoffe auf einen Volumenteil der zu behandelnden korrosiven Fluide.

5. Verwendung einer Hemmzusammensetzung, in reiner oder verdünnter Form, die in beliebigen Anteilen in Wasser löslich ist und mindestens ein Amin, nämlich 3-Methoxypropylamin (MOPA), als Korrosionsinhibitor enthält, um die Deckenkorrosion bei Rohrleitungen für Erdölprodukte zu begrenzen, in denen ein erdölartiges Fluid strömt und die bei der Erzeugung von Erdöl und/oder Gas eingesetzt werden.

6. Verwendung nach Anspruch 5, wobei die Hemmzusammensetzung darüber hinaus mindestens einen korrosionshemmenden Stoff umfasst, der vorzugsweise aus den Imidazolinen und/oder deren Derivaten und/oder den Phosphorsäureestern und/oder den Thiosäuren ausgewählt ist.

7. Verwendung nach einem beliebigen der Ansprüche 5 oder 6, wobei die Hemmzusammensetzung, die rein oder verdünnt verwendet wird, Folgendes umfasst:
- mindestens ein Amin gemäß der Begriffsbestimmung in Anspruch 5,
- mindestens ein Imidazolin,
- mindestens ein ethoxyliertes Imidazolin, und
- mindestens eine Thiosäure.

8. Verwendung nach einem beliebigen der Ansprüche 5 bis 7, zum Schutz sowohl vor der Deckenkorrosion (Top of line) als auch vor der Korrosion der Bodenmatrix (Bottom line).

9. Verwendung nach einem beliebigen der Ansprüche 5 bis 8, wobei die Hemmzusammensetzung derart zur kontinuierlichen Behandlung eingesetzt wird, dass sie 100 ppm bis 10.000 ppm ausmacht, ausgedrückt nach Gewicht der korrosionshemmenden Stoffe auf einen Volumenteil der zu behandelnden korrosiven Fluide.
